# EUROPEAN PATENT SPECIFICATION

(11) **EP 2 822 884 B1**
(45) Date of publication and mention of the grant of the patent: **30.12.2015**
(21) Application number: 13720569.6
(22) Date of filing: 08.03.2013
(51) Int. Cl.: B65G 47/08, B65G 59/06, B65B 23/14

(54) **APPARATUS FOR MOVING AND GROUPING FLAT PRODUCTS**
VORRICHTUNG ZUM BEWEGEN UND GRUPPIEREN VON FLACHEN PRODUKTEN
APPAREIL PERMETTANT DE DÉPLACER ET DE REGROUPER DES PRODUITS PLATS

(30) Priority: 09.03.2012 IT TO20120211
(43) Date of publication of application: 14.01.2015
(73) Proprietor: SPS Italiana Pack Systems S.p.A., 36036 Torrebelvicino (VI) (IT)
(72) Inventor: MASINI, Fabio, I-28047 Oleggio (Novara) (IT); PURICELLI, Paolo, I-28010 Cavallirio (Novara) (IT)
(74) Representative: Gerbino, Angelo
(86) International application number: PCT/IB2013/051849
(87) International publication number: WO 2013/132465

(56) References cited:
- BE-A- 366 205
- US-B1- 6 189 678

## Description

The present invention relates to an apparatus for moving and grouping flat products, in particular biscuits, having a perimetral edge and two main faces. With such an apparatus it is possible to remove products from several magazines or loaders inside which they are stacked and to form piles of the desired height - typically formed by a predefined number of products - on a conveyor device directed towards a station for packaging the piles (see for example US 6189678B1).

EP-A-0 868 349 and the corresponding US-6 189 678 describe a known apparatus of this kind comprising a conveyor device from which catch elements for pushing the products and a plurality of magazines which contain stacks of the products protrude and are arranged in succession along the conveyor device. In this apparatus the catch elements push the bottom products of each stack - which are supported by adjustable-height supports - so as to direct them on the conveyor device.

The interaction between the catch element and each product to be transferred is moreover concentrated in a restricted region of the latter, which may easily result in damage thereto considering the friability of the material from which biscuits are typically made.

This known apparatus is moreover provided with rotating elements which are associated with the bottom end of each magazine and which act exclusively as selective supports for the stack of products contained therein, allowing, following their temporary rotation, one or more bottom products to fall onto the conveyor device. These elements are therefore static during the stage of transfer of the products from the respective magazine to the conveyor device, during which stage they act as stationary supports for the stack of products, and are rotated only when the level of the surface supporting the products in the magazine must be varied or the conditions for enabling/disabling falling of the products from the magazine onto the conveying device are switched.

EP-A-2 172 398 describes another type of known apparatus of the kind indicated at the start of the present description, in which a wheel for removing a product from the bottom of the respective stack so as to impart to it a certain speed is arranged underneath each loader. The subsequent impact with a catch element protruding from the conveyor device is therefore dampened, since the difference between the respective speeds has been reduced, such that there is less risk of breakage. Furthermore, the wheel is arranged eccentrically with respect to the central longitudinal axis of the conveyor device such that its impact generates a force which is not aligned with the direction of advancing movement of the conveyor and acts on the products so as to impart to them a "launching" action. Consequently, in this case also, the products may be subject to relatively high stresses. Furthermore, they must be necessarily extracted from the loader one at a time.

BE-366 205, describes another type of known apparatus of the type indicated at the start of the present description, in which a pair of horizontal-axis wheels suitable for removing a product from the bottom of the respective stack so as to impart to it a certain speed are arranged underneath the central portion of a loader. The subsequent impact with a catch element protruding from the conveyor device is therefore dampened, since the difference between the respective speeds has been reduced. Moreover, since the wheels are arranged underneath the central portion of the loader, their action is exerted substantially on the same edge portion of the product which will be pushed by the catch element, dangerously increasing the stresses transmitted in this restricted area. Moreover, the wheels, which have an axis parallel to the plane in which the products lie, exert on the latter a transverse force parallel to their smaller dimension, i.e. their thickness, which in the case of fragile products, such as dry biscuits, is the prelude to breakages.

The object of the present invention is therefore to provide an improved apparatus compared to those of the prior art.

According to the invention this object is achieved by means of an apparatus having the features mentioned specifically in claim 1 below. Preferred features of the apparatus according to the invention are described in the dependent claims.

In the apparatus according to the invention, each product exiting from the respective loader is pushed jointly by a catch element and by two rotating elements, which respectively act on the central zone and on the lateral zones, so that the pushing action is homogeneous and symmetrical, reducing considerably the risk of breakage due to violent and/or asymmetrical contact.

Moreover, the apparatus according to the invention may extract from each loader more than one product during each working cycle, this being limited only by the geometrical volume of the products and the various components and not by the nature of the movement operations performed, with a consequent increase in productivity.

A further subject of the present invention is a method for moving and grouping flat products, which envisages using the aforementioned apparatus.

Further advantages and features of the present invention will become clear from the detailed description which follows, provided purely by way of a non-limiting example with reference to the accompanying drawings in which:
Figure 1 is a schematic plan view of an apparatus according to the invention;
Figures 2 to 5 illustrate schematically successive operating steps of a loader of the apparatus according to Figure 1;
Figure 6 is a cross-sectional view along the line VI-VI of Figure 2;
• Figure 7 is a cross-sectional view along the line VII-VII of Figure 3; and
Figure 8 is a cross-sectional view along the line VIII-VIII of Figure 5.

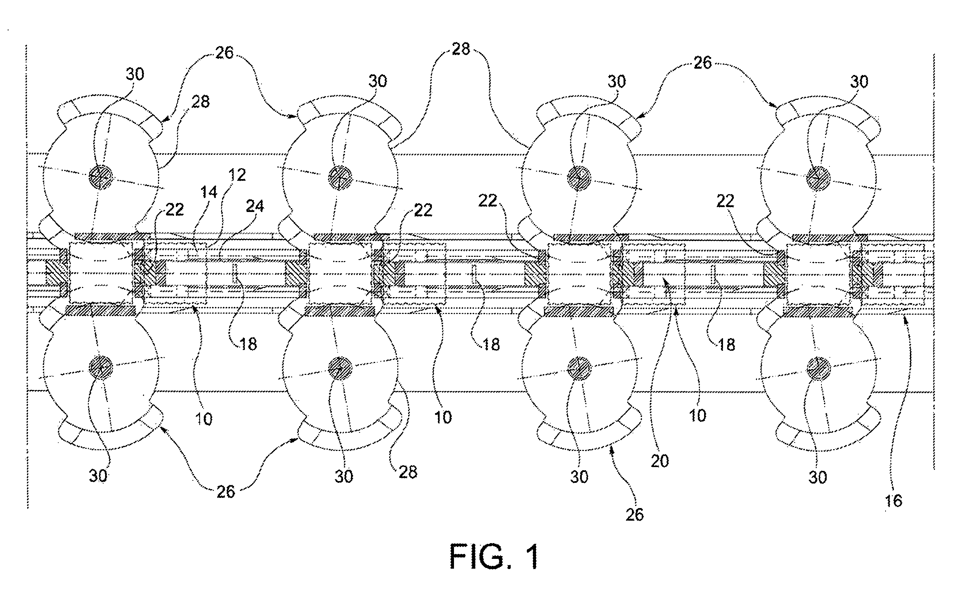

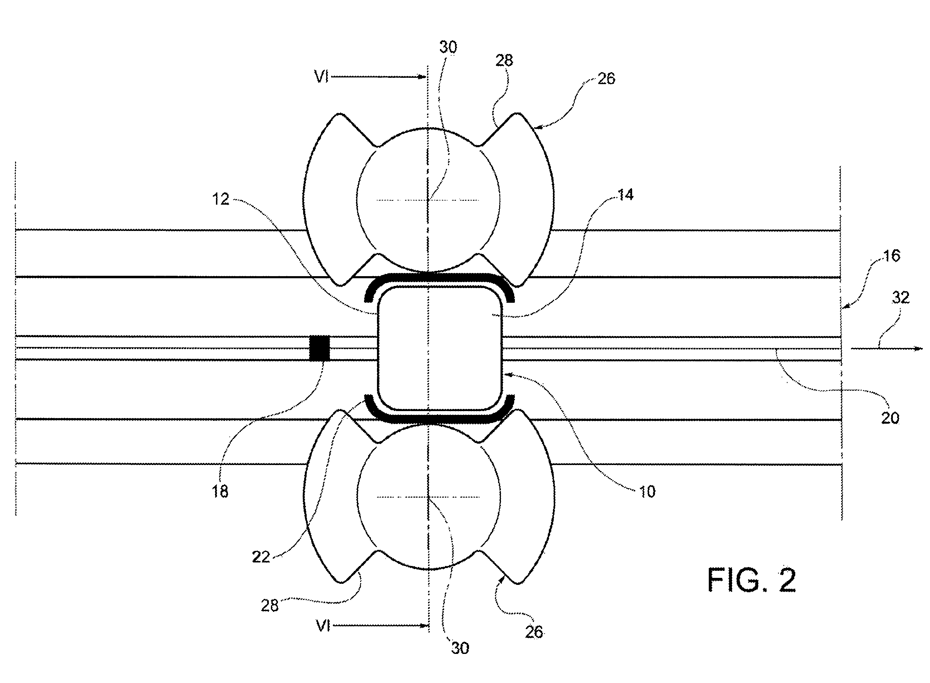

Figure 1 shows an apparatus for moving and grouping flat products 10, in particular biscuits, having a perimetral edge 12 and two main faces 14 (Figs. 2-8).

The apparatus comprises a conveyor device 16 from which catch elements 18 suitable for pushing the products 10 along a conveying direction coinciding with the longitudinal axis 20 of the conveyor device 16 protrude.

A plurality of magazines or loaders 22 which contain stacks of products 10 and are arranged in succession above the conveyor device 16 are arranged along the conveying direction.

Each magazine 22 has, arranged underneath its bottom end, members suitable for guiding the products which exit from it towards the conveyor device 16 and comprising a pair of bars 24 arranged symmetrically along the sides of the longitudinal axis 20. The bars 24 thus define a channel for the passage of the catch elements 18 along the longitudinal axis 20.

Each magazine 22 has arranged at its bottom end a respective pair of rotating elements consisting of wheels 26 arranged symmetrically along the sides of the respective magazine 22 and having along their perimetral edge two symmetrically arranged recesses 28. In variations of embodiment not shown the wheels 26 could have only one recess or more than two recesses. Furthermore, the thickness of the wheels 26 may be variable, for example having a ramp-like profile. The wheels 26 have axes 30 which are parallel to each other as well as to the axis of the bottom end portion of the respective magazine 22. These axes 30 are instead substantially at right angles to the horizontal plane passing through the longitudinal conveying axis 20. The wheels 26 lie substantially horizontally above the horizontal plane passing through the portion of the guide bars 24 situated underneath the respective magazine 22.

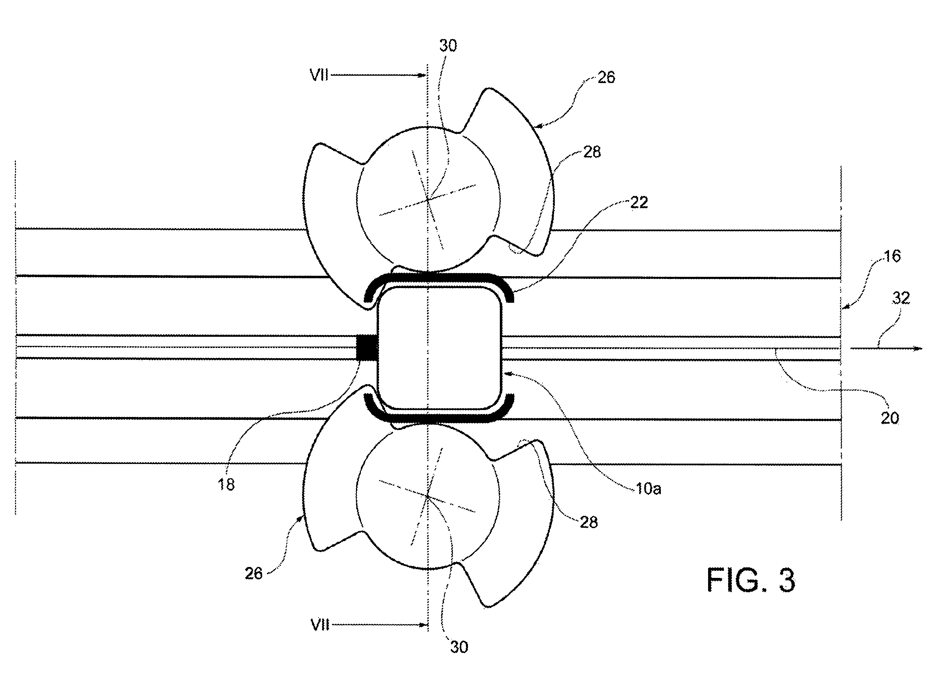

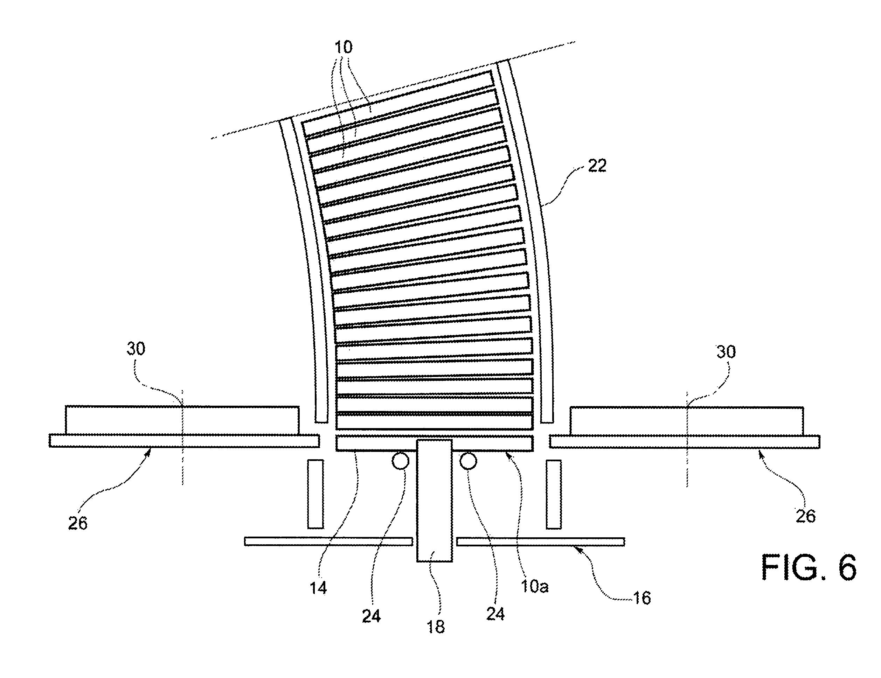

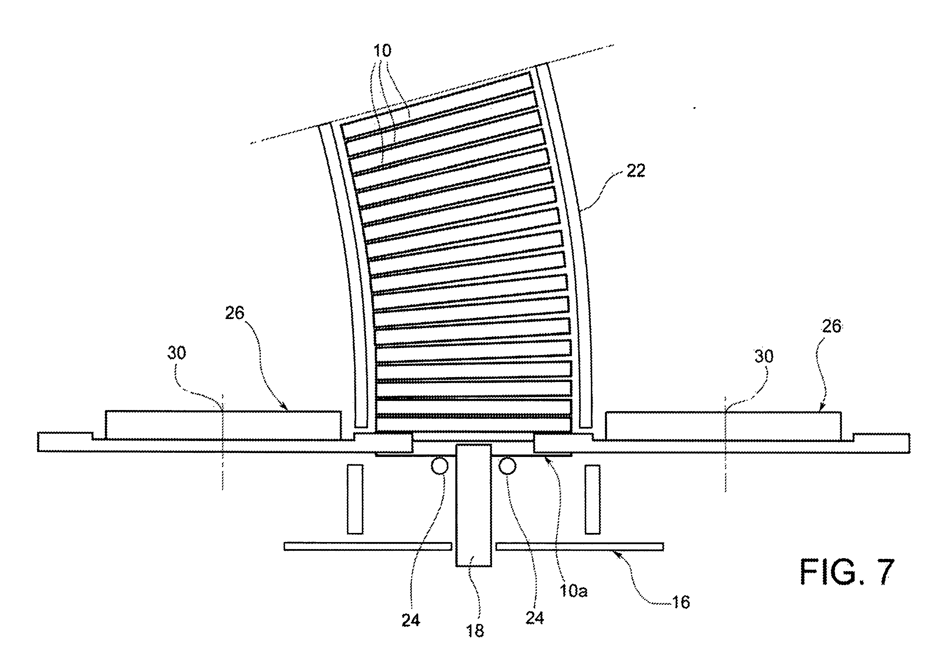

During operation, the conveyor device 16, to which the catch elements 18 are fixed, slides in the longitudinal direction defined by the arrow 32 in Figure 2. In the condition shown in Figure 2, one of the respective recesses 28 of the wheels 26 faces the magazine 22 with which they are associated so as to leave the discharge aperture of the magazine free. The last product 10a of the stack may thus fall from the bottom end of the magazine 22 onto the underlying section of the bars 24 (Fig. 6). When a catch element 18 starts to move towards the product 10a, the wheels 26 start to rotate about the respective axis 30 so that the product 10a is subjected (Figures 3 and 7) to the combined and contemporaneous pushing action of the wheels 26 and the catch element 18. In particular, the latter pushes the central portion of the edge 12 of the rear portion of the product 10a, while radial sides of the recesses 28 of the wheels 26 push the respective sides portions of this edge 12. In other words, the products 10 exiting from the bottom of the respective magazine 22 are subjected to the pushing action of the catch element 18 on the portion of their edge 12 which is situated along the longitudinal axis 20 of the conveyor device 16 and to the pushing action of the wheels 26 on the respective portions of their edge which are substantially furthest from the axis 20.

Advantageously, this simultaneous pushing action takes place during the initial stage of the exiting movement of the product 10a from the magazine 22. It is moreover possible that there is a slight discrepancy during the initial stages of contact between the product 10a and on the one hand the wheels 26 and on the other hand the catch element 18 which makes contact initially. In any case, there will always be a period of time during which combined and contemporaneous pushing of the product 10a by the wheels 26 and the catch element 18 will take place.

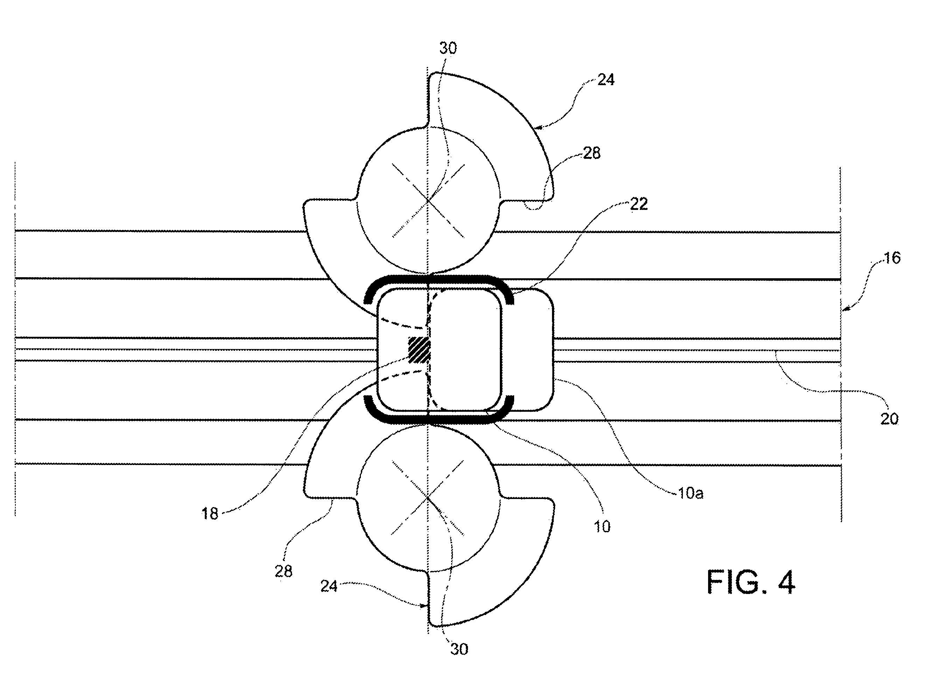

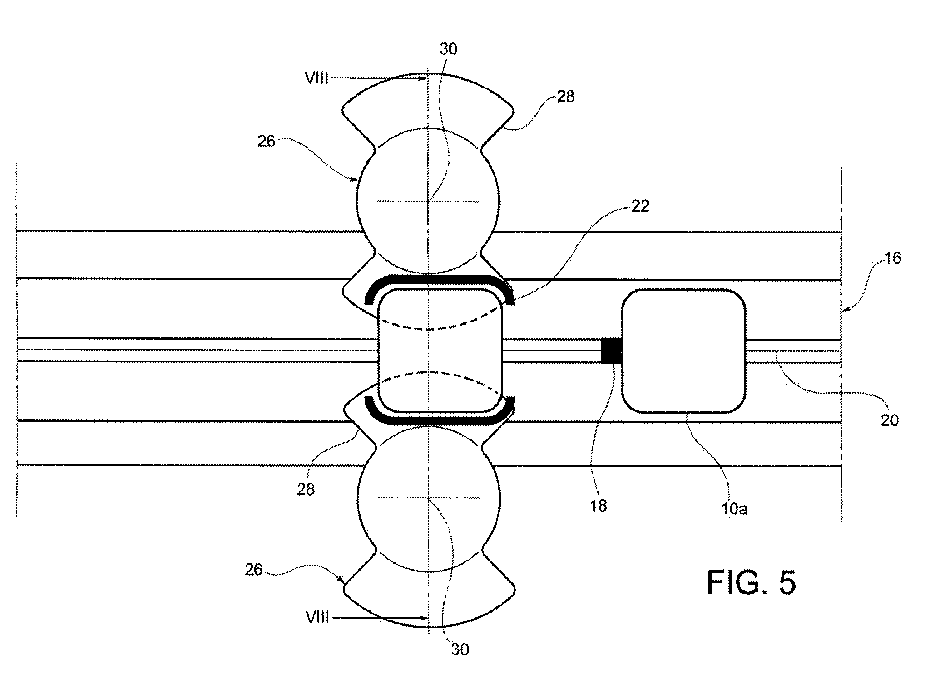

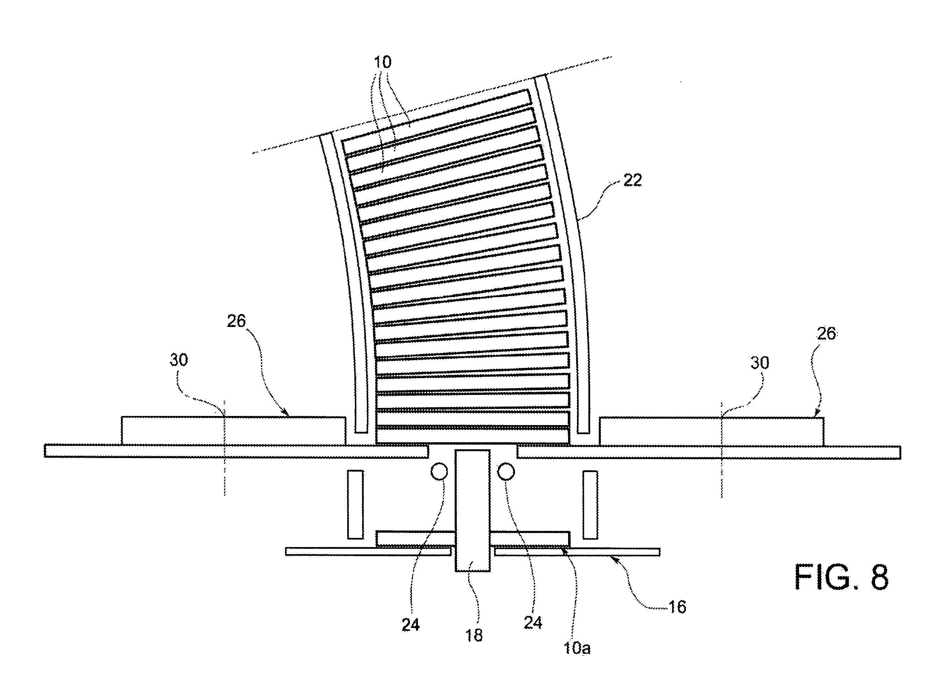

As a result, the product 10a, subjected to the combined and contemporaneous pushing action of the wheels 26 and the catch element 18, is pushed along the axis 20 of the device 16 (Fig. 4), until it is no longer subjected to the action of the wheels 26, but only to that of the catch element 18 (Fig. 5). The weight of the product 10a is supported by the bars 24 which, in a manner known per se, are profiled so as to lower gradually, allowing gradual and soft deposition of the product 10a onto the conveying surface of the device 16 (Fig. 8). During this latter rotation, the wheels 26 act as a floor for the magazine 22, preventing falling of what has now become the last product in the stack until the start of a new working cycle similar to that described above.

In a manner conventional per se, the products 10 discharged from the magazines 22 onto the conveyor device 16 form piles which are typically formed by a predetermined number of products which are then sent to a packaging station. A major feature of the apparatus according to the invention consists in the fact that the pushing action on the product 10a during the delicate transition phase from the magazine 22 to the conveyor device 16 is homogeneous and symmetrical, reducing considerably the risk of breakages due to violent and/or asymmetrical contact. The products 10 are therefore handled with care and suitably supported during the whole of transfer step from the bottom of the respective magazine 22 to the conveyor device 16, such that they may be moved at very fast rates - about 600 or more units per minute per magazine - thereby speeding up significantly operation. Moreover, as a result of this delicate handling action, it is possible to move suitably also any broken products which thus must not be discarded, but are kept assembled and processed in a manner similar to that of the unbroken products.

For the sake of simplicity, reference has been made to the extraction from the magazine 22 of a single product 10a for each rotation cycle of the wheels. It is nevertheless possible to extract more than one product per cycle, varying the positioning height of the bars 24 and the wheels 26, without being subject to particular constraints except those determined by the geometrical volume of the products 10 and the various components of the apparatus.

It should also be noted that each of the magazines 22 and the associated wheels 26 may be operated independently of the other magazines 22. In this way it is possible to avoid the generation of rejects during start-up and stoppage and continue operation of the apparatus in a satisfactory manner, even when a single magazine and/or the line supplying the products 10 is not functioning for some unforeseen reason. This independent operating mode also allows discharging of the products 10 from the various magazines to be performed in a balanced manner as desired.

Of course, without modifying the principle of the invention, the constructional details and the embodiments may be greatly varied with respect to that described purely by way of example, without thereby departing from the scope of the invention as defined in the accompanying claims.

## Claims

1. Apparatus for moving and grouping flat products (10) having two main faces (14) and a perimetral edge (12), comprising :
- a conveyor device (16) from which catch elements (18) suitable for pushing said products (10) along a longitudinal conveying direction protrude,
- a plurality of magazines (22) which contain stacks of said products (10) and are arranged in succession along the conveying direction above said conveyor device (16),
- respective guide members arranged below the bottom end of each magazine (22) and suitable for guiding products (10) exiting from the magazine (22) towards the conveyor device (16), and
- a respective pair of rotating elements associated with the bottom end of each magazine (22), the elements of each pair being respectively arranged on the sides of the magazine (22) and above the guide members, and having axes (30) parallel to each other and parallel to the axis of the bottom end portion of the respective magazine (22),
said apparatus being **characterized in that** said rotating elements are pushing members of said products (10) along the longitudinal conveying direction, in such a way that, during use of the apparatus, the products (10) exiting from the bottom of the respective magazine (22) are subjected, on different portions of their edge (12), to the combined and contemporaneous action of said rotating elements and of a catch element (18), during at least a part of the exiting movement.

2. Apparatus according to claim 1, wherein said rotating elements are wheels (26) symmetrically arranged on the sides of the respective magazine (22) and having at least one recess (28) along their perimetral edge.

3. Apparatus according to claim 2, wherein said wheels (26) have two symmetrically arranged recesses.

4. Apparatus according to any one of the preceding claims, wherein said guide members arranged below the bottom end of each magazine (22) comprise a pair of bars (24) symmetrically arranged on the sides of a longitudinal axis (20) of the conveyor device (16), so as to define a channel for the passage of the catch elements (18) along the said longitudinal axis (20).

5. Apparatus according to any one of the preceding claims, wherein the products (10) exiting from the bottom of the respective magazine (22) are subjected to the combined and contemporaneous action on their edge (12) of said rotating elements and a catch element (18) during the initial part of the exiting movement from the magazine (22).

6. Method for moving and grouping flat products (10) having two main faces (14) and a perimetral edge (12), which envisages using an apparatus comprising:
- a conveyor device (16) from which catch elements (18) suitable for pushing said products (10) along a longitudinal conveying direction protrude,
- a plurality of magazines (22) which contain stacks of said products (10) and are arranged in succession along the conveying direction above said conveyor device (16),
- respective guide members arranged below the bottom end of each magazine (22) and suitable for guiding products (10) exiting from the magazine (22) towards the conveyor device (16), and
- a respective pair of rotating elements, in particular wheels (26), associated with the bottom end of each magazine (22), the elements of each pair being respectively arranged on the sides of the magazine (22) and above the guide members, and having axes (30) parallel to each other and parallel to the axis of the bottom end portion of the respective magazine (22).
in which method said rotating elements act as pushing members of said products (10) along the longitudinal conveying direction, in such a way that the products (10) exiting from the bottom of the respective magazine (22) are subjected, on different portions of their edge (12), to the combined and contemporaneous action of said rotating elements and of a catch element (18), during at least a part of the exiting movement.

7. Method according to claim 6, wherein the products (10) exiting from the bottom of the respective magazine (22) are subjected to the combined and contemporaneous action on their edge (12) of said rotating elements and of a catch element (18) during the initial part of the exiting movement from the magazine (22).

8. Method according to claim 6, wherein the products (10) exiting from the bottom of the respective magazine (22) are subjected to the combined and contemporaneous action on their edge (12) of said rotating elements and of a catch element (18) during the initial part of the exiting movement from the magazine (22), with a possible slight discrepancy during the initial stages of contact between the product (10) and on the one hand the rotating elements and on the other hand the catch element (18) which makes contact initially.

9. Method according to any one of the claims 6 to 8, wherein the products (10) exiting from the bottom of the respective magazine (22) are subjected to the pushing action of the catch element (18) on the portion of their edge (12) which is situated along a longitudinal axis (20) of the conveyor device (16) and to the pushing action of said rotating elements on the respective portions of their edge which are furthest from said longitudinal axis (20).

10. Method according to any one of claims 6 to 9, wherein the products (10) exit from the bottom of each magazine (22) at a rate of at least 600 units per minute.

11. Method according to any one of claims 6 to 10, wherein the rotating elements which act as pushing member and are associated with each magazine (22) are operated independently of those associated with the other magazines (22).

12. Method according to any one of claims 6 to 11, wherein said flat products (10) are biscuits.

## Patentansprüche

1. Einrichtung zum Bewegen und Gruppieren flacher Produkte (10), die zwei Hauptflächen (14) und einen Umfangsrand (12) aufweisen, umfassend:
- eine Fördervorrichtung (16), aus der Rastelemente (18) hervorstehen, die geeignet sind, die Produkte (10) entlang einer Längsförderrichtung zu schieben,
- eine Mehrzahl von Speichern (22), die Stapel der Produkte (10) enthalten und entlang der Förderrichtung oberhalb der Fördervorrichtung (16) hintereinander angeordnet sind,
- jeweilige Führungselemente, die unterhalb des unteren Endes jedes Speichers (22) angeordnet und zum Leiten der Produkte (10) geeignet sind, die den Speicher (22) in Richtung der Fördervorrichtung (16) verlassen, und
- ein jeweiliges Paar von Drehelementen, die mit dem unteren Ende jedes Speichers (22) verbunden sind, wobei die Elemente jedes Paars jeweils an den Seiten des Speichers (22) und oberhalb der Führungselemente angeordnet sind und Achsen (30) aufweisen, die parallel zueinander und parallel zur Achse des unteren Endabschnitts des jeweiligen Speichers (22) sind,
wobei die Einrichtung **dadurch gekennzeichnet ist, dass** die Drehelemente Schiebeelemente für die Produkte (10) entlang der Längsförderrichtung sind, und zwar in einer solchen Weise, dass während des Gebrauchs der Einrichtung die aus dem Boden des jeweiligen Speichers (22) austretenden Produkte (10) an verschiedenen Abschnitten ihres Rands (12) der kombinierten und gleichzeitigen Wirkung der Drehelemente und eines Rastelements (18) zumindest während eines Teils der Austrittsbewegung ausgesetzt sind.

2. Einrichtung gemäß Anspruch 1, wobei die Drehelemente Räder (26) sind, die an den Seiten des jeweiligen Speichers (22) symmetrisch angeordnet sind und mindestens eine Vertiefung (28) entlang ihres Umfangsrands aufweisen.

3. Einrichtung gemäß Anspruch 2, wobei die Räder (26) zwei symmetrisch angeordnete Vertiefungen aufweisen.

4. Einrichtung gemäß einem der vorhergehenden Ansprüche, wobei die unterhalb des unteren Endes jedes Speichers (22) angeordneten Führungselemente ein Paar von Stangen (24) umfassen, die symmetrisch an den Seiten einer Längsachse (20) der Fördervorrichtung (16) angeordnet sind, um einen Kanal für den Durchtritt der Rastelemente (18) entlang der Längsachse (20) zu definieren.

5. Einrichtung gemäß einem der vorhergehenden Ansprüche, wobei die aus dem Boden des jeweiligen Speichers (22) austretenden Produkte (10) während des anfänglichen Teils der Austrittsbewegung aus dem Speicher (22) an ihrem Rand (12) der kombinierten und gleichzeitigen Wirkung der Drehelemente und eines Rastelements (18) ausgesetzt sind.

6. Verfahren zum Bewegen und Gruppieren flacher Produkte (10), die zwei Hauptflächen (14) und einen Umfangsrand (12) aufweisen, welches Verfahren die Verwendung einer Einrichtung vorsieht, die Folgendes umfasst:
- eine Fördervorrichtung (16), aus der Rastelemente (18) hervorstehen, die geeignet sind, die Produkte (10) entlang einer Längsförderrichtung zu schieben,
- eine Mehrzahl von Speichern (22), die Stapel der Produkte (10) enthalten und entlang der Förderrichtung oberhalb der Fördervorrichtung (16) hintereinander angeordnet sind,
- jeweilige Führungselemente, die unterhalb des unteren Endes jedes Speichers (22) angeordnet und zum Leiten der Produkte (10) geeignet sind, die den Speicher (22) in Richtung der Fördervorrichtung (16) verlassen, und
- ein jeweiliges Paar von Drehelementen, insbesondere Rädern (26), die mit dem unteren Ende jedes Speichers (22) verbunden sind, wobei die Elemente jedes Paars jeweils an den Seiten des Speichers (22) und oberhalb der Führungselemente angeordnet sind und Achsen (30) aufweisen, die parallel zueinander und parallel zur Achse des unteren Endabschnitts des jeweiligen Speichers (22) sind,
in welchem Verfahren die Drehelemente als Schiebeelemente für die Produkte (10) entlang der Längsförderrichtung fungieren, und zwar in einer solchen Weise, dass die aus dem Boden des jeweiligen Speichers (22) austretenden Produkte (10) an verschiedenen Abschnitten ihres Rands (12) der kombinierten und gleichzeitigen Wirkung der Drehelemente und eines Rastelements (18) zumindest während eines Teils der Austrittsbewegung ausgesetzt werden.

7. Verfahren gemäß Anspruch 6, wobei die aus dem Boden des jeweiligen Speichers (22) austretenden Produkte (10) während des anfänglichen Teils der Austrittsbewegung aus dem Speicher (22) an ihrem Rand (12) der kombinierten und gleichzeitigen Wirkung der Drehelemente und eines Rastelements (18) ausgesetzt werden.

8. Verfahren gemäß Anspruch 6, wobei die aus dem Boden des jeweiligen Speichers (22) austretenden Produkte (10) während des anfänglichen Teils der Austrittsbewegung aus dem Speicher (22) an ihrem Rand (12) der kombinierten und gleichzeitigen Wirkung der Drehelemente und eines Rastelements (18) ausgesetzt werden, mit einer möglichen geringfügigen Abweichung während der Anfangsphasen des Kontakts zwischen dem Produkt (10) und einerseits den Drehelementen und andererseits dem Rastelement (18), das den Erstkontakt herstellt.

9. Verfahren gemäß einem der Ansprüche 6 bis 8, wobei die aus dem Boden des jeweiligen Speichers (22) austretenden Produkte (10) an dem Abschnitt ihres Rands (12), der entlang einer Längsachse (20) der Fördervorrichtung (16) gelegen ist, der Schubwirkung des Rastelements (18) und an den jeweiligen Abschnitten ihres Rands, die am weitesten entfernt von der Längsachse (20) liegen, der Schubwirkung der Drehelemente ausgesetzt werden.

10. Verfahren gemäß einem der Ansprüche 6 bis 9, wobei die Produkte (10) aus dem Boden jedes Speichers (22) mit einer Rate von mindestens 600 Einheiten pro Minute ausgegeben werden.

11. Verfahren gemäß einem der Ansprüche 6 bis 10, wobei die Drehelemente, die als Schiebeelement fungieren und mit jedem Speicher (22) verbunden sind, unabhängig von jenen betätigt werden, die mit den anderen Speichern (22) verbunden sind.

12. Verfahren gemäß einem der Ansprüche 6 bis 11, wobei die flachen Produkte (10) Kekse sind.

## Revendications

1. Appareil pour déplacer et grouper des produits plats (10) comportant deux faces principales (14) et un bord périmétrique (12), comprenant :
- un dispositif transporteur (16) à partir duquel des éléments de prise (18), appropriés pour pousser lesdits produits (10) le long d'une direction de transport longitudinale, font saillie,
- une pluralité de magasins (22) qui contiennent des empilements desdits produits (10) et sont agencés en succession le long de la direction de transport au-dessus dudit dispositif transporteur (16),
- des membres de guidage respectifs agencés en dessous de l'extrémité inférieure de chaque magasin (22) et appropriés pour guider des produits (10) sortant du magasin (22) vers le dispositif transporteur (16), et
- une paire respective d'éléments rotatifs associés à l'extrémité inférieure de chaque magasin (22), les éléments de chaque paire étant respectivement agencés sur les côtés du magasin (22) et au-dessus des membres de guidage, et comportant des axes (30) parallèles l'un à l'autre et parallèles à l'axe de la partie d'extrémité inférieure du magasin respectif (22),
ledit appareil étant **caractérisé en ce que** lesdits éléments rotatifs sont des membres poussoirs desdits produits (10) le long de la direction de transport longitudinale, de manière telle que, durant l'utilisation de l'appareil, les produits (10) sortant du bas du magasin respectif (22) soient soumis, sur des portions différentes de leur bord (12), à l'action combinée et simultanée desdits éléments rotatifs et d'un élément de prise (18), durant au moins une partie du mouvement de sortie.

2. Appareil selon la revendication 1, dans lequel lesdits éléments rotatifs sont des roues (26) symétriquement agencées sur les côtés du magasin respectif (22) et comportant au moins un évidement (28) le long de leur bord périmétrique.

3. Appareil selon la revendication 2, dans lequel lesdites roues (26) comportent deux évidements symétriquement agencés.

4. Appareil selon l'une quelconque des revendications précédentes, dans lequel lesdits membres de guidage agencés en dessous de l'extrémité inférieure de chaque magasin (22) comprennent une paire de barres (24) symétriquement agencées sur les côtés d'un axe longitudinal (20) du dispositif transporteur (16), afin de définir un canal pour le passage des éléments de prise (18) le long dudit axe longitudinal (20).

5. Appareil selon l'une quelconque des revendications précédentes, dans lequel les produits (10) sortant du bas du magasin respectif (22) sont soumis à l'action combinée et simultanée sur leur bord (12) desdits éléments rotatifs et d'un élément de prise (18) durant la partie initiale du mouvement de sortie à partir du magasin (22).

6. Procédé pour déplacer et grouper des produits plats (10) comportant deux faces principales (14) et un bord périmétrique (12), qui envisage l'utilisation d'un appareil comprenant :
- un dispositif transporteur (16) à partir duquel des éléments de prise (18), appropriés pour pousser lesdits produits (10) le long d'une direction de transport longitudinale, font saillie,
- une pluralité de magasins (22) qui contiennent des empilements desdits produits (10) et sont agencés en succession le long de la direction de transport au-dessus dudit dispositif transporteur (16),
- des membres de guidage respectifs agencés en dessous de l'extrémité inférieure de chaque magasin (22) et appropriés pour guider des produits (10) sortant du magasin (22) vers le dispositif transporteur (16), et
- une paire respective d'éléments rotatifs, en particulier des roues (26), associés à l'extrémité inférieure de chaque magasin (22), les éléments de chaque paire étant respectivement agencés sur les côtés du magasin (22) et au-dessus des membres de guidage, et comportant des axes (30) parallèles l'un à l'autre et parallèles à l'axe de la partie d'extrémité inférieure du magasin respectif (22),
dans lequel procédé lesdits éléments rotatifs servent de membres poussoirs desdits produits (10) le long de la direction de transport longitudinale, de manière telle que les produits (10) sortant du bas du magasin respectif (22) soient soumis, sur des portions différentes de leur bord (12), à l'action combinée et simultanée desdits éléments rotatifs et d'un élément de prise (18), durant au moins une partie du mouvement de sortie.

7. Procédé selon la revendication 6, dans lequel les produits (10) sortant du bas du magasin respectif (22) sont soumis à l'action combinée et simultanée sur leur bord (12) desdits éléments rotatifs et d'un élément de prise (18) durant la partie initiale du mouvement de sortie à partir du magasin (22).

8. Procédé selon la revendication 6, dans lequel les produits (10) sortant du bas du magasin respectif (22) sont soumis à l'action combinée et simultanée sur leur bord (12) desdits éléments rotatifs et d'un élément de prise (18) durant la partie initiale du mouvement de sortie à partir du magasin (22), avec une éventuelle légère divergence durant les stades initiaux de contact entre le produit (10) et, d'une part, les éléments rotatifs et, d'autre part, l'élément de prise (18) qui entre initialement en contact.

9. Procédé selon l'une quelconque des revendications 6 à 8, dans lequel les produits (10) sortant du bas du magasin respectif (22) sont soumis à l'action de poussée de l'élément de prise (18) sur la portion de leur bord (12) qui est située le long d'un axe longitudinal (20) du dispositif transporteur (16) et à l'action de poussée desdits éléments rotatifs sur les portions respectives de leur bord qui sont les plus éloignées dudit axe longitudinal (20).

10. Procédé selon l'une quelconque des revendications 6 à 9, dans lequel les produits (10) sortent du bas de chaque magasin (22) à une vitesse d'au moins 600 unités par minute.

11. Procédé selon l'une quelconque des revendications 6 à 10, dans lequel les éléments rotatifs qui servent de membre poussoir et sont associés à chaque magasin (22) sont mis en fonctionnement indépendamment de ceux associés aux autres magasins (22).

12. Procédé selon l'une quelconque des revendications 6 à 11, dans lequel lesdits produits plats (10) sont des biscuits.
